# FASCICULE DE BREVET EUROPEEN

(11) **EP 3 903 108 B1**
(45) Date de publication et mention de la délivrance du brevet: **17.04.2024**
(21) Numéro de dépôt: 19808855.1
(22) Date de dépôt: 29.11.2019
(51) Int. Cl.: G01N 35/00, G01N 35/02, G01N 35/10, G01N 35/04

(54) **UNITÉ DE TRANSPORT D'ÉCHANTILLONS POUR AUTOMATE DE DIAGNOSTIC**
PROBENTRANSPORTEINHEIT FÜR DIAGNOSEAUTOMAT
SAMPLES TRANSPORT UNIT FOR AUTOMATED DIAGNOSTIC ANALYZER

(30) Priorité: 30.11.2018 FR 1872110
(43) Date de publication de la demande: 03.11.2021
(73) Titulaire: Erba Diagnostics Limited, Leopardstown Dublin, 18 (IE)
(72) Inventeur: VAZIRANI, Nikhil, Mumbai MAHARASHTRA 400049 (IN); ANDLAUER, Sylvain, 34920 LE CRES (FR); GHORIS, Valentin, 34070 MONTPELLIER (FR)
(74) Mandataire: Regimbeau
(86) Numéro de dépôt international: PCT/EP2019/083156
(87) Numéro de publication internationale: WO 2020/109592

(56) Documents cités:
- EP-A2- 2 299 278
- WO-A1-2017/081410
- US-A1- 2008 069 730

## Description

### DOMAINE TECHNIQUE DE L'INVENTION

L'invention appartient au domaine des instruments d'analyse médicale, notamment en hématologie et en diabétologie.

L'invention concerne plus particulièrement une unité de transport d'échantillons, pour un automate de prélèvement et d'analyse d'échantillons de fluides corporels en vue d'un diagnostic, ainsi qu'un automate comprenant une ou plusieurs telles unités de transport.

### ETAT DE LA TECHNIQUE

Le traitement et l'analyse d'échantillons de fluides corporels d'individus, tels que des échantillons de sang ou d'urine, est désormais en grande partie automatisé. Les échantillons sont stockés dans des contenants qui possèdent chacun un identifiant propre permettant de remonter à un individu, transportés en série sur une voie d'analyse.

L'analyse consiste par exemple en une mesure biochimique ou physiologique. L'analyse est réalisée par un analyseur, associé à une unité de manipulation d'échantillons qui déplace les échantillons un par un à la suite sur une voie d'analyse. Plusieurs phases doivent être respectées pour chaque échantillon : agitation pendant une durée prédéterminée, identification pour associer les résultats à un individu, incubation, transfert, comptage, etc. La durée totale de l'ensemble de ces phases mises bout à bout est de l'ordre de la minute.

Les tubes d'échantillons sont en général transportés de manière groupée dans des portoirs, afin de faciliter la manipulation en laboratoire des échantillons et d'assurer la cadence d'analyse, mesurée en nombre d'échantillons traités par heure.

L'appareil mécanique qui réalise le transport des portoirs d'échantillons, aussi appelé « auto-sampler » selon la terminologie anglosaxonne courante, est placé verticalement en partie basse de l'analyseur.

Dans certains dispositifs existants, une file de portoirs s'étend sous l'analyseur et la voie d'analyse prélève un échantillon à une position donnée de la file. L'ordre d'introduction des portoirs sur la file définit ainsi l'ordre d'analyse des échantillons. Dans cette configuration, le principal axe d'accélération de la cadence d'analyse consiste à passer immédiatement au portoir suivant dès lors que tous les tubes du portoir courant ont été analysés.

Dans certains dispositifs parmi ces dispositifs existants, les portoirs sont transportés en file dans une direction perpendiculaire à la direction d'alignement des tubes. La direction de transport s'étend selon la largeur de la file.

Toutefois, cette solution impose un ordre d'analyse complètement séquentiel et dépendant de l'ordre d'introduction des portoirs. Pour réaliser des analyses suivant un autre ordre de priorité, la seule solution est l'introduction manuelle d'un échantillon « urgent ».

Or, il existe de nombreux cas où un ordre d'analyse non séquentiel est préférable, sans qu'il ne soit souhaitable d'introduire un ou plusieurs échantillons de manière manuelle.

Par exemple, on peut souhaiter faire passer en priorité un échantillon ou un portoir donné, même s'il n'est pas à l'avant de la file.

De plus, il est préférable que l'automate de diagnostic autorise des temps où l'échantillon est mis en attente après analyse, pour déterminer si un test supplémentaire s'avère nécessaire. Le temps d'attente correspond à un temps d'obtention d'un premier résultat de test. Or, dans les systèmes existants, tout temps d'attente imposé à un échantillon se répercute sur les portoirs suivants de la file.

Par exemple, il est courant dans le domaine de pratiquer des tests supplémentaires de type « Rerun » selon la terminologie courante (une nouvelle itération du test initial, pour préciser ou vérifier un résultat de mesure en cas de suspicion d'erreur) ou de type « Reflex » (des tests secondaires pratiqués seulement sur un sous-ensemble de tubes).

La demande internationale de brevet WO 2017/081410 décrit un automate de diagnostic comprenant un passeur qui permet de prélever des échantillons indépendamment de leur ordre de positionnement dans des portoirs. Le passeur est commandé par un ordonnanceur qui gère les actions de prélèvement pour en optimiser la cadence. L'ordre de prélèvement est déterminé par un algorithme d'optimisation de l'ordonnanceur.

Cet automate de diagnostic présente toutefois un encombrement important. Son fonctionnement est complexe et induit des risques de pannes mécaniques liés aux multiples mouvements en rotation des portoirs et à l'élévation verticale de ces portoirs sur plusieurs niveaux. De plus, cet automate n'est pas prévu pour être facilement mis en série avec d'autres automates, puisque l'orientation des portoirs est perpendiculaire au chemin de communication entre automates, de préférence de gauche à droite ou de droite à gauche face à l'instrument.

La demande de brevet européen EP 2 299 278 décrit (voir Figure 4) une unité de transport de portoirs comportant trois voies pour le passage des portoirs. La première voie et la deuxième voie correspondent à un même sens de passage, respectivement avec ou sans passage par l'analyseur ; les échantillons ne nécessitant pas une analyse peuvent ainsi traverser l'unité de transport plus rapidement, pour éventuellement atteindre un autre analyseur consécutif. La troisième voie permet un passage de portoirs dans le sens contraire.

Cette dernière solution, qui permet de limiter les restrictions du trafic de portoirs, est toutefois non seulement mécaniquement complexe et difficile à gérer, mais aussi encombrante. La publication US 2008/069730 A1 divulgue une autre unité de transport.

Aucun des systèmes de l'état de la technique n'assure des performances satisfaisantes avec un encombrement modéré, notamment si une flexibilité dans l'ordre d'analyse des échantillons est requise.

La performance des automates de diagnostic comprend la cadence d'analyse mais aussi la fiabilité des résultats obtenus. Notamment, une réduction trop importante de la phase d'agitation, par exemple en-dessous de 10 secondes, nuit fortement à la fiabilité des analyses, de même qu'une agitation trop longue.

Un autre critère de performance est la capacité à traiter des tests de natures différentes. Par exemple, certains échantillons peuvent nécessiter des tests Reflex très spécifiques, comme des tests par fluorescence, ou des traitements spécifiques que la plupart des analyseurs ne proposent pas.

On souhaite donc permettre à l'utilisateur final de l'automate de diagnostic d'enchaîner plusieurs analyseurs qui n'assurent pas nécessairement les mêmes types de tests, et qui n'ont donc pas nécessairement la même cadence, notamment pour le traitement d'un même échantillon dans plusieurs domaines (par exemple hématologie et diabétologie).

Il est en effet peu avantageux d'enchaîner des analyseurs comportant des unités de transport en série en fonctionnement séquentiel, car l'analyseur le plus lent impose sa basse cadence à l'ensemble du système.

### PRESENTATION GENERALE DE L'INVENTION

Il existe donc un besoin pour une unité de transport apte à assurer une cadence optimale pour l'analyse d'échantillons contenus dans des flacons ou dans des tubes, avec un impact réduit des temps d'attente ou des échantillons isolés « urgents » sur la cadence d'analyse.

On recherche notamment une unité de transport qui permet de faire repasser facilement des analyses à des échantillons ayant déjà fait l'objet de premiers tests, très rapidement après la fin des premiers tests, sans perturber fortement la cadence d'analyse.

On recherche une unité de transport de faible encombrement, avec des déplacements de portoirs d'une complexité modérée.

Il existe un besoin additionnel pour une unité de transport d'échantillons conçue pour pouvoir être mise en série avec d'autres unités de transport dans un même automate (pour augmenter la capacité de traitement d'échantillons), éventuellement associées à des analyseurs ayant des cadences maximales distinctes.

Pour répondre à ces besoins, l'invention concerne, selon un premier aspect, une unité de transport de contenants d'échantillons conforme à la revendication 1.

Dans l'unité de transport de l'invention, la zone d'attente constitue un tampon pour stocker momentanément des échantillons en attente d'un premier résultat d'analyse, de sorte que lesdits échantillons soient rapidement replacés dans la zone d'analyse si des tests secondaires sont nécessaires.

Un avantage intéressant de l'invention est que la voie de transport reste libre lorsqu'un portoir est déplacé entre une zone d'attente et une zone d'analyse, ainsi que durant l'analyse d'un échantillon. Le tri des échantillons pour l'analyse est donc indépendant du transport de portoirs dans la file.

Plus spécifiquement, le plateau est configuré pour qu'un portoir puisse réaliser des allers-retours entre une zone d'attente de la surface de positionnement du plateau et une zone d'analyse de la surface de positionnement du plateau, sans que ledit portoir ne recroise la voie de transport durant les allers-retours.

L'inclusion d'une zone d'analyse et d'une zone d'attente dans le plan du plateau permet de se limiter à des déplacements bidimensionnels de portoirs, au cours des analyses des différents échantillons contenus dans les portoirs. L'encombrement de l'unité de transport de l'invention est donc réduit, à la fois en largeur et en longueur.

Le système de votre invention autorise que des tubes ne nécessitant pas une analyse traversent rapidement l'automate de diagnostic, et autorise donc de désynchroniser les cadences de plusieurs automates de diagnostic mis en série, tout en conservant une architecture simple, peu encombrante.

On allie ainsi la possibilité de faire des tests secondaires tels que des tests Rerun ou Reflex (un portoir étant mis temporairement en attente dans la zone d'attente) et le maintien d'une cadence élevée.

Un avantage additionnel est que l'unité de transport ne comprend pas nécessairement une voie de retour surajoutée parallèlement à la voie de transport. Dans une phase où l'automate de diagnostic tourne à plein régime, la zone d'attente permet, à elle seule, de conserver une marge suffisante après la réalisation de premiers tests pour permettre des tests secondaires.

De plus, l'unité de transport de l'invention est modulaire, puisque les extrémités de la voie de transport peuvent être connectées soit à d'autres voies de transport d'autres unités de transport, soit à des espaces de stockage de portoirs tels que des espaces d'une baie d'entrée ou de sortie.

Des caractéristiques additionnelles non-limitatives de l'unité de transport définie ci-avant sont les suivantes, prises seules ou en l'une quelconque des combinaisons possibles :
- l'unité comprend en outre des moyens de transport configurés pour transporter un portoir d'échantillons le long de la voie de transport, un actionnement des moyens de transport étant indépendant d'un déplacement du plateau.
- les moyens de sélection comprennent un butoir glissant, un glissement du butoir s'effectuant selon une deuxième direction non parallèle à la première direction, les moyens de sélection comprenant en outre des moyens de déplacement de butoir.
- le plateau est un plateau tournant, l'unité de transport comprenant en outre un actionneur qui commande une rotation du plateau tournant, ladite rotation permettant de déplacer un portoir d'échantillons entre la zone d'attente et la zone d'analyse.
- la zone d'attente et la zone d'analyse sont symétriques par rapport à un axe de rotation du plateau tournant.
- le plateau comprend une zone de transfert, la zone de transfert s'étendant en outre sur la voie de transport.
- l'unité comprend en outre une surface séparatrice traversant un centre du plateau, ladite surface étant configurée pour empêcher un passage incontrôlé d'un contenant d'échantillon vers la zone d'analyse lors de l'analyse d'un échantillon, de préférence une vitre.
- le plateau est configuré pour permettre un déplacement en translation d'un portoir d'échantillons selon une troisième direction non parallèle à la première direction.
- le plateau est mobile en translation selon la troisième direction.
- l'unité comprend une première zone d'attente, une zone de transfert s'étendant sur la voie de transport, une deuxième zone d'attente, la zone d'analyse, et une troisième zone d'attente, le plateau étant configuré pour amener un portoir d'échantillons en l'une quelconque desdites zones.
- la zone d'attente et la zone d'analyse présentent des extrémités alignées, une direction d'extension de la zone d'attente et une direction d'extension de la zone d'analyse étant parallèles à la première direction de la voie de transport.
- l'unité comprend en outre un élément d'arrêt configuré pour venir en butée contre un portoir d'échantillons présent sur la voie de transport.
- l'unité de transport est adaptée pour transporter un portoir dans un unique sens le long de la voie de transport, depuis la première extrémité vers la deuxième extrémité.
- une largeur maximale de l'unité de transport selon la première direction est inférieure ou égale à deux fois une longueur d'un portoir.

Selon un deuxième aspect, l'invention vise un automate de diagnostic comprenant une première unité de transport de contenants d'échantillons telle que définie ci-avant, ainsi qu'une première unité de manipulation d'échantillons, la première unité de manipulation d'échantillons comprenant :
un module de déplacement d'un contenant d'échantillon vers une position d'échantillonnage,
un module de support d'aiguille, comprenant une aiguille configurée pour réaliser un prélèvement d'un échantillon depuis la position d'échantillonnage,
une unité de traitement configurée pour commander un déplacement du module de déplacement et du module de support d'aiguille.

Des caractéristiques additionnelles non-limitatives de l'automate défini ci-avant sont les suivantes, prises seules ou en l'une quelconque des combinaisons possibles :
- le module de déplacement est configuré pour translater un contenant d'échantillons selon une quatrième direction et selon une cinquième direction, la quatrième direction étant une direction d'alignement de la zone d'analyse de la première unité de transport.
- l'automate comprend en outre :
   une deuxième unité de transport de contenants d'échantillons telle que définie ci-avant, associée à une deuxième unité de manipulation d'échantillons qui comprend un module de déplacement, un module de support d'aiguille et une unité de traitement, la deuxième unité de manipulation étant de préférence accolée à la première unité de manipulation,
   et/ou comprend en outre une baie d'entrée comprenant un premier espace de logement d'un portoir d'échantillons,
   et/ou comprend en outre une baie de sortie comprenant un deuxième espace de logement d'un portoir d'échantillons,
   la voie de transport de la première unité de transport d'échantillons étant dans le prolongement de la voie de transport de la deuxième unité de transport d'échantillons et/ou étant dans le prolongement du premier espace de logement de portoir et/ou étant dans le prolongement du deuxième espace de logement de portoir.
- une première cadence maximale de traitement d'échantillons, que la première unité de manipulation est configurée pour atteindre, est distincte d'une deuxième cadence maximale de traitement d'échantillons, que la deuxième unité de manipulation est configurée pour atteindre.

### PRESENTATION GENERALE DES FIGURES

D'autres caractéristiques, buts et avantages de l'invention ressortiront de la description qui suit, qui est illustrative et non limitative et qui doit être lue avec les dessins annexés parmi lesquels :
La **Figure 1** représente une architecture fonctionnelle d'un automate de diagnostic selon un mode de réalisation ;
La **Figure 2** est une vue d'ensemble de dessus d'un automate selon le mode de réalisation de la Figure 1 ;
La **Figure 3** est un schéma de principe d'une unité de transport d'échantillons selon un premier mode ;
La **Figure 4a** est une vue de dessus de l'unité de transport de la Figure 3, où les butoirs glissants sont dans une première position ;
La **Figure 4b** est une vue de côté de l'unité de transport de la Figure 3, où les butoirs glissants sont dans une deuxième position ;
Les **Figures 5a** **et** **5b** sont respectivement des vues en perspective de dessus et de dessous d'une première partie du module de déplacement et du module de sélection visibles en Figure 3 ;
Les **Figures 6a****,** **6b** **et** **6c** sont respectivement des vues en perspective de dessus, de dessous dans une première position, et de dessous dans une deuxième position, pour une deuxième partie du module de déplacement et du module de sélection visibles en Figure 3 ;
La **Figure 7** est un schéma de principe d'une unité de transport d'échantillons selon un deuxième mode ;
La **Figure 8** est une vue en perspective d'une première partie d'une unité de manipulation et d'analyse d'échantillons, associée à une partie de l'unité de transport selon le mode de la Figure 3 ;
La **Figure 9** est une vue en perspective d'une deuxième partie de l'unité de manipulation et d'analyse d'échantillons de la Figure 8 ;
Les **Figures 10a à 10g** représentent plusieurs positions successives de deux portoirs d'échantillons au cours du fonctionnement d'une unité de transport d'échantillons selon le mode de la Figure 3 ;
Les **Figures 11a à 11i** représentent plusieurs positions successives de plusieurs portoirs d'échantillons au cours du fonctionnement d'une unité de transport d'échantillons selon le mode de la Figure 7 ;
Les **Figures 12a à 12h** représentent plusieurs positions successives de plusieurs portoirs d'échantillons au cours du fonctionnement d'une unité de transport d'échantillons selon un mode alternatif ;
La **Figure 13** représente une architecture à deux unités de transport d'échantillons consécutives.

### DESCRIPTION DETAILLEE DE MODES DE REALISATION

Dans la description qui va suivre, on décrit plusieurs exemples d'unités de transport de contenants d'échantillons, destinées à fonctionner de manière couplée avec des analyseurs d'automates de diagnostic médical. Par « échantillon » on entend un volume liquide ou solide sur lequel l'automate de diagnostic réalise un ou plusieurs tests, et on entend par « contenant d'échantillons » tout récipient qui permet le transport individualisé d'un échantillon issu d'un individu.

Dans les exemples qui vont suivre, les contenants d'échantillons sont des tubes transportés dans des portoirs, chaque portoir comportant dix emplacements et chaque emplacement pouvant renfermer un contenant. On comprendra aisément qu'il est possible d'utiliser un autre nombre d'emplacements, ou un autre mode de transport de contenants.

Des éléments similaires sont désignés avec les mêmes références alphanumériques dans la description et sur les figures annexées.

### Architecture d'ensemble d'un automate de diagnostic - Exemple 1

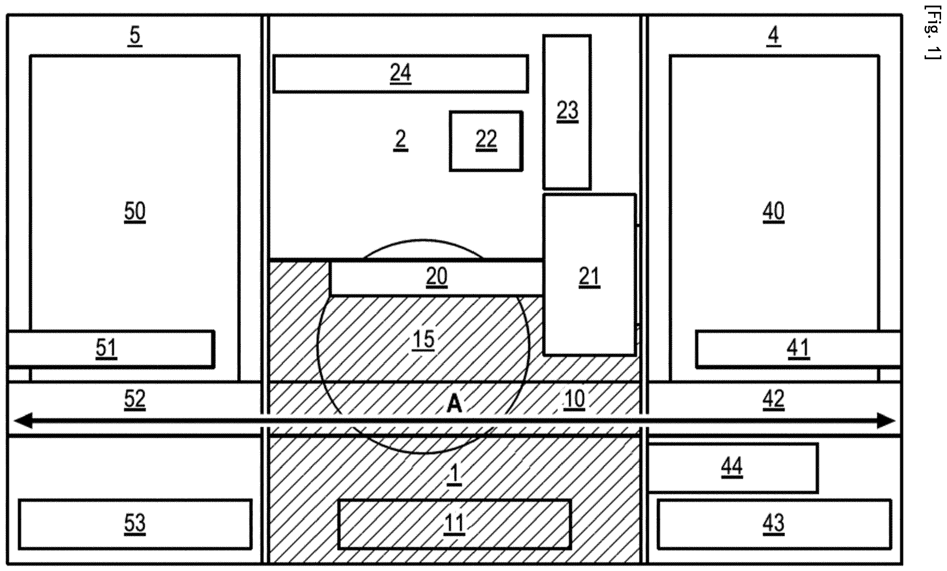

On donne en **Figure 1** une représentation fonctionnelle par blocs d'un automate de diagnostic, vu du dessus. Cet automate peut être assemblé et utilisé dans un laboratoire d'analyse médicale ou dans un hôpital, par exemple en diabétologie ou en hématologie.

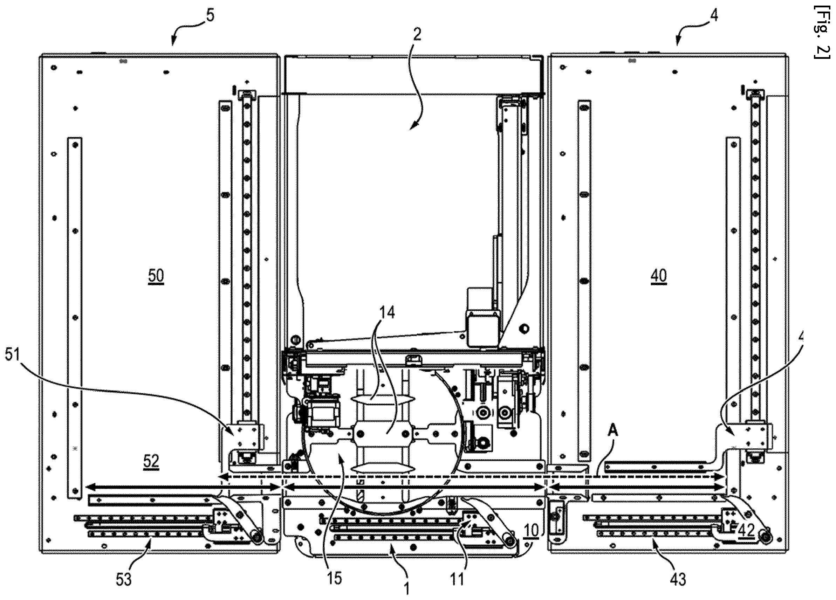

Un schéma structurel du même automate, également vu du dessus, est représenté en **Figure 2****.**

Dans toute la suite, les contenants d'échantillons sont des tubes. L'automate comprend une unité 1 de transport de tubes, une unité 2 de manipulation de tubes pour analyse, ainsi qu'une baie d'entrée 4 et une baie de sortie 5.

L'unité de transport, la baie d'entrée et la baie de sortie fonctionnent de manière synchronisée pour assurer le transport de portoirs de tubes selon une direction de transport A, les portoirs n'étant pas visibles sur les figures 1 et 2.

Dans une variante possible, les portoirs de tubes sont mobiles uniquement de la droite vers la gauche selon l'orientation de la Figure 2.

Les opérations des unités 1 et 2 et des baies 4 et 5 sont contrôlées par un ou plusieurs processeurs d'une unité de contrôle qui n'est pas représentée sur la Figure 1.

L'unité de transport 1 comprend une voie de transport 10 dont les dimensions en longueur et en largeur permettent de loger au moins un portoir de tubes. De plus, l'unité de transport comprend des moyens de déplacement de portoirs d'échantillons, permettant d'amener des échantillons à une position permettant leur analyse selon des modalités décrites ci-après. Ici, les moyens de déplacement prennent la forme d'un plateau mobile 15. Plus précisément, le plateau mobile est ici circulaire.

L'unité de transport 1 comprend également des moyens de transport pour transporter des portoirs le long de la voie 10 de transport. Dans toute la suite, les moyens de transport correspondent à une unité annexe 11 parallèle à la voie de transport, comportant un rail.

L'unité 1 comporte aussi des moyens 14 de sélection de portoir.

L'unité de manipulation 2 est programmée pour préparer des échantillons pour analyse, puis pour réaliser les analyses. A ce titre, elle comprend un espace de stockage de réactifs, ainsi qu'une mémoire informatique pour sauvegarder et exporter des résultats d'analyse.

L'unité de manipulation 2 comprend un module 20 de déplacement de contenants d'échantillons, un module 23 de support d'aiguille comprenant notamment une aiguille pour le prélèvement d'un échantillon et son insertion dans un espace d'analyse 22, et une unité de traitement 24 programmée pour commander le déplacement des modules 20 et 23. Les analyses, par exemple diabétologiques ou hématologiques, sont réalisées dans l'espace d'analyse 22.

De façon avantageuse, l'unité 2 comprend également un module 21 de préparation et de mise à disposition des échantillons pour analyse. La structure de l'unité de manipulation 2 sera décrite ci-après.

La baie d'entrée 4 constitue un espace de stockage de portoirs, chaque portoir comportant ou non des échantillons à analyser.

La baie 4 comporte une surface 40 d'entrée, dont les dimensions permettent de loger une file de portoirs (ici alignés dans la longueur).

La surface d'entrée est prévue pour comporter un nombre de portoirs supérieur à 2, ici 20 portoirs.

La baie 4 comporte également un espace 42 permettant de loger au moins un portoir, et qui se situe dans le prolongement de la voie de transport 10 de l'unité 1 selon la direction de transport A. La baie 4 comporte en outre un poussoir 41 configuré pour amener un portoir de la surface 40 vers l'espace 42, le poussoir 41 étant ici monté sur un rail.

La baie 4 comporte des moyens de transport pour accompagner le mouvement d'un portoir de l'espace 42 vers la voie 10 de transport, ici une unité annexe 43 parallèle à l'espace 42 et comportant un rail.

Ainsi, en fonctionnement, un portoir peut être amené sur la voie de transport 10 depuis la surface 40 d'entrée, via l'espace 42.

La baie 4 d'entrée comporte en outre une unité de détection 44 d'échantillons et de portoirs, configurée pour référencer des identifiants des échantillons contenus dans les portoirs, ainsi que pour détecter des positions des portoirs sur la direction A.

La baie de sortie 5 constitue également un espace de stockage de portoirs. Sa structure est ici très similaire à celle de la baie 4 d'entrée.

La baie 5 comporte ainsi une surface 50 de sortie où une file de portoirs (ici alignés dans la longueur) peut être logée, ainsi qu'un poussoir 51, un espace 52 où un portoir peut être reçu en sortie de la voie de transport 10, et une unité annexe 53 comportant un rail.

Un avantage de fournir une baie d'entrée et une baie de sortie est d'accroître considérablement l'espace de stockage de portoirs d'échantillons, pour permettre la réalisation d'un grand nombre d'analyses.

On notera que l'unité de transport 1 est modulaire. Elle est ici connectée à une baie d'entrée et à une baie de sortie, mais elle pourrait en alternative être connectée à d'autres unités de transport, selon les besoins.

### Unité de transport d'échantillons

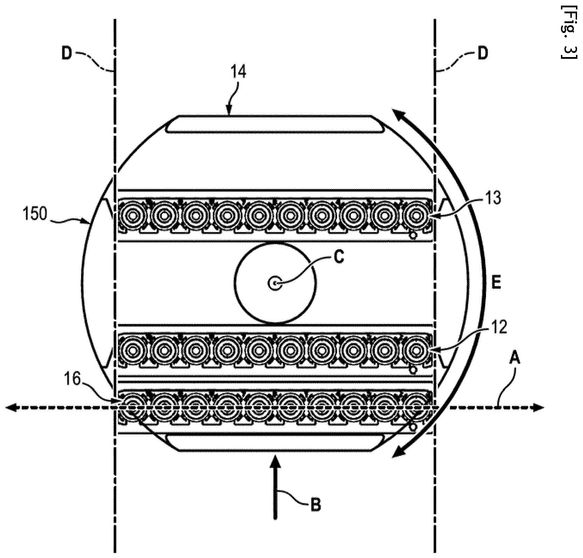

On donne en **Figure 3** une vue schématique partielle de dessus d'une unité de transport selon un premier mode de réalisation, qui correspond à l'unité de transport représentée en Figures 1 et 2.

Dans ce mode de réalisation particulier, le plateau 15 est mobile. Un déplacement du plateau 15 entraîne des zones de positionnement de portoirs et permet de déplacer des portoirs entre une zone d'attente et une zone d'analyse.

Le plateau 15 comporte ainsi une surface 150 de positionnement de portoirs, pouvant tourner sur elle-même selon la direction E, par rapport à un bâti non représenté ici. Le bâti est fixe.

Le plateau 15 croise la voie de transport de portoirs selon la direction A. De façon avantageuse, le plateau 15 comporte une zone de transfert 16 à l'intersection avec la voie de transport, la zone de transfert 16 s'étendant donc selon la direction A.

Selon l'invention, le plateau comporte une zone d'analyse 13 et une zone d'attente 12 adaptées pour accueillir chacune un portoir d'échantillons.

On notera que le terme « zone » se rapporte à un volume fixe par rapport au bâti. Ainsi, les zones 12, 13 et 16 ne suivent pas le mouvement rotatif de la surface 150 du plateau 15, et ne suivent donc pas le mouvement d'un portoir donné. Au contraire, le plateau 15 est configuré pour déplacer un portoir entre ces différentes zones.

Le plateau 15 est donc configuré pour être déplacé selon la direction E, afin d'amener un portoir entre la zone d'attente 12 et la zone d'analyse 13. Il permet ici des allers-retours d'un portoir dans les deux sens entre la zone d'attente 12 et la zone d'analyse 13, en fonction de la position angulaire de la surface tournante 150.

Le plateau 15 forme donc à la fois une surface de support et de locomotion des portoirs comprenant les échantillons à analyser.

Ici, la zone d'attente 12 et la zone d'analyse 13 sont symétriques par rapport à un axe C de rotation du plateau tournant, l'axe C passant par un centre du plateau.

Ainsi, pour amener jusqu'à la zone d'analyse un portoir situé dans la zone d'attente, et/ou pour amener jusqu'à la zone d'attente un portoir situé dans la zone d'analyse, le plateau 15 tourne de 180° autour de l'axe C. Un avantage des zones d'attente et d'analyse situées à des positions angulaires séparées de 180° est un encombrement spatial fortement réduit du plateau selon la direction A.

En effet, la zone d'attente 12 et la zone d'analyse 13 ont des extrémités deux à deux alignées selon les directions D, telles que représentées sur la Figure 3, et ont une extension totale selon la direction A égale à une largeur de portoir. Une largeur maximale de l'unité de transport selon la direction A est de préférence inférieure ou égale à deux fois une longueur d'un portoir d'échantillons. Ici, ladite largeur maximale est égale à environ 1,5 fois la longueur d'un portoir.

Dans une configuration alternative (non représentée sur les figures), la zone d'analyse 13 est déportée de 90° sur le plateau par rapport à la zone d'attente 12. Ainsi, pour amener jusqu'à la zone d'analyse un portoir situé dans la zone d'attente, le plateau 15 tourne de 90° autour de son axe de rotation.

Dans cette configuration, la position de la zone d'attente peut par exemple être la même que sur la Figure 3, et la zone d'analyse s'étend alors perpendiculairement à la zone d'attente, sur le côté gauche du plateau. Un plateau selon ce dernier cas peut notamment être utilisé en combinaison avec une unité de manipulation d'échantillons comprenant un module de support d'aiguille capable de se déplacer perpendiculairement à la direction A. Un tel module de support d'aiguille permet à l'aiguille de percer et faire un prélèvement directement dans les dix positions de tubes dans le portoir.

On notera que dans toutes les configurations ci-avant, on peut prévoir en alternative un plateau fixe, au lieu d'un plateau mobile dont le mouvement permet de déplacer un portoir entre la zone d'attente et la zone d'analyse. Des moyens additionnels commandables électroniquement sont ajoutés au plateau pour permettre un déplacement de portoirs sur la surface fixe du plateau, entre la zone d'attente et la zone d'analyse.

A titre d'exemple, les moyens de sélection 14 peuvent être configurés pour réaliser non seulement un glissement de portoir entre la zone de transfert et la zone d'attente, mais également entre la zone d'attente et la zone d'analyse.

Pour tous les plateaux décrits ci-avant, la zone d'attente 12 et la zone d'analyse 13 sont déportées de la voie de transport s'étendant selon la direction A (les zones 12 et 13 étant notamment séparées de la zone de transfert 16).

Un avantage important de ce positionnement des zones d'attente et d'analyse est que des portoirs peuvent circuler de droite à gauche en traversant la zone de transfert 16, sans blocage de la voie de transport lors du déplacement des portoirs entre la zone d'attente 12 et la zone d'analyse 13.

On dissocie ainsi, de façon très avantageuse, le transport des échantillons selon la direction A et le tri des échantillons en vue de leur analyse pour des premiers tests et/ou des tests secondaires faisant suite au résultat des premiers tests.

En supposant qu'une deuxième unité de transport semblable à l'unité 1 est insérée entre l'unité 1 et la baie de sortie 5 des Figures 1 et 2, il est ainsi possible d'acheminer directement un portoir entre la baie d'entrée 4 et ladite deuxième unité, sans s'arrêter sur l'unité 1.

De plus, l'acheminement dudit portoir à la deuxième unité ne réduit pas la cadence d'analyse pour les échantillons en cours d'analyse situés sur le plateau 15 de l'unité 1.

La zone d'attente 12 permet ainsi d'absorber le temps de détermination qu'un échantillon nécessite ou non des tests secondaires. Des échantillons peuvent rester en attente dans la zone d'attente 12, sans perturber le transport d'autres portoirs via la voie de transport 10. Pendant leur attente, les échantillons ne sont pas replacés sans la voie de transport 10 et ne bloquent donc pas le transport d'autres portoirs.

L'unité de transport 1 de sélection comprend en outre des moyens 14 de sélection de portoirs, qui sont configurés pour déplacer un portoir entre la voie de transport 10 et la zone d'attente 12.

On a représenté sur la Figure 3 une direction B de déplacement de portoirs par les moyens de sélection, entre la zone de transfert 16 et la zone d'attente 12.

Dans ce premier mode de réalisation de l'unité de transport, la direction B de déplacement des portoirs depuis la voie de transport est perpendiculaire à la direction A de transport des portoirs. Ainsi, les moyens de sélection 14 sont configurés pour décaler verticalement un portoir depuis la voie de transport, ce qui permet d'amener un portoir sur la zone d'attente pour l'extraire de la voie de transport. Les moyens 14 permettent également de ramener sur la voie de transport un portoir présent sur la zone d'attente 12.

Dans la première position représentée en Figure 3, les moyens 14 de sélection sont situés aux extrémités du plateau 15.

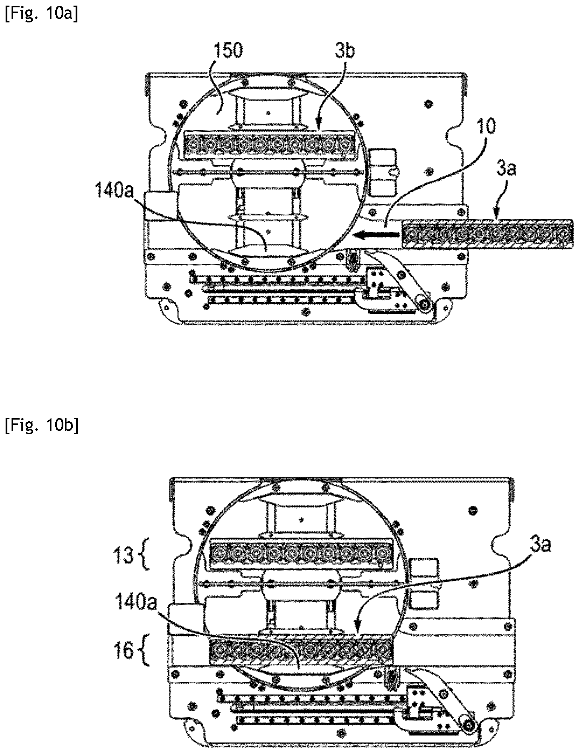

Un exemple de fonctionnement du plateau 15 et des moyens de sélection 14, lors d'une séquence d'analyse des échantillons contenus dans un portoir, sera donnée ci-après en relation aux Figures 10A à 10G.

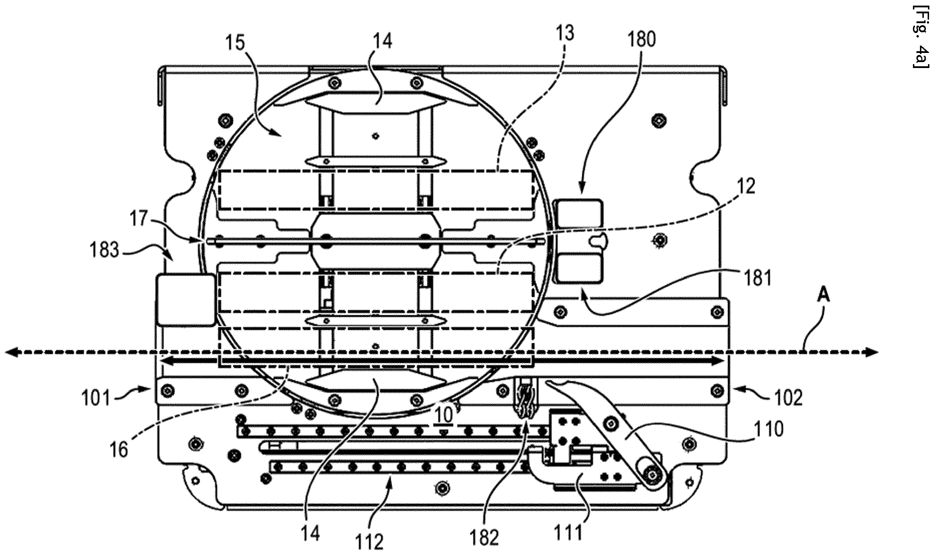

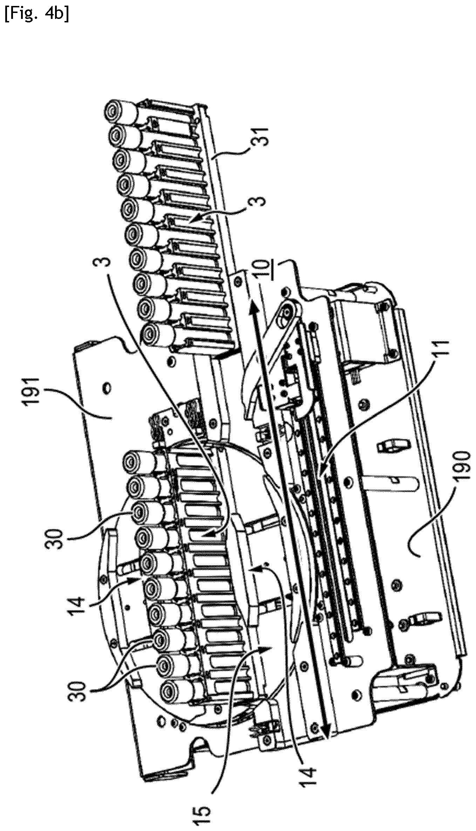

La **Figure 4a** est une vue rapprochée de dessus de l'unité de transport 1 des Figures 1 et 2. On donne en **Figure 4b** une vue de côté de la même unité de transport sur laquelle sont placés deux portoirs 3, l'un des portoirs étant déjà présent dans la zone d'attente et l'autre portoir étant en cours d'insertion sur la voie de transport 10 de l'unité 1.

Sur la Figure 4b, on a représenté une surface basse 190 de l'unité de transport 1, pouvant reposer sur une table par exemple, ainsi qu'une surface 191 haute qui se situe au même niveau que la voie de transport et le plateau tournant. Les surfaces 190 et 191 appartiennent à un bâti.

Chaque portoir 3 comprend un support 31, par exemple en polymère, de forme globale rectangulaire. Une cloison du support sépare les échantillons de chaque paire de deux échantillons consécutifs. Sur la Figure 4b, chaque emplacement est occupé par un tube 30. Les tubes 30 comprennent des échantillons de fluide corporel tel que du sang, et sont fermés par un bouchon qui peut être percé par une aiguille d'un analyseur. En alternative, certains emplacements pourraient être vides.

La voie de transport 10 s'étend selon la direction de transport A entre une première extrémité gauche 101 et une deuxième extrémité droite 102. L'espace 42 de la baie d'entrée 4 (cette baie n'étant pas représentée ici) est dans le prolongement de l'extrémité droite 102 et l'espace 52 de la baie de sortie 5 (cette baie n'étant pas représentée ici) est dans le prolongement de l'extrémité gauche 101.

L'extrémité droite 102 est ainsi adaptée pour recevoir un portoir d'échantillons depuis un dispositif, par exemple depuis la baie d'entrée 4 (au niveau de l'espace 42), et est adaptée pour transmettre un portoir d'échantillons à un autre dispositif, par exemple à la baie de sortie 5 (au niveau de l'espace 52).

Le plateau tournant 15 comprend de façon optionnelle, outre les zones d'attente, d'analyse et de transfert, une surface séparatrice 17 traversant un centre du plateau tournant, empêchant un passage incontrôlé d'un tube vers la zone d'analyse 13, notamment lors d'une analyse d'un échantillon. Cette surface 17 s'étend de préférence en hauteur depuis un diamètre du plateau tournant. Si le plateau est tournant, la surface séparatrice est solidaire du mouvement de rotation du plateau tournant.

Ici, la surface 17 est une vitre. De façon avantageuse, on peut prévoir une terminaison arrondie de la surface 17, configurée pour surmonter le haut des tubes d'un portoir situé dans la zone d'attente.

De plus, l'unité de transport 1 comprend optionnellement :
- Un capteur 180 permettant de détecter si un portoir est présent dans la zone d'analyse ;
- Un capteur 181 permettant de détecter si un portoir est présent dans la zone d'attente ;
- Un capteur 182 permettant de détecter si un portoir est présent dans la zone de transfert ;
- Un capteur 183 permettant de détecter si un portoir est présent dans la voie de transport, permettant par exemple de détecter si un portoir est en cours de transfert vers la voie 52 de la baie de sortie 5 ou vers une autre unité de transport 1.

Les moyens de transport d'un portoir sur la voie 10 de transport comprennent un doigt 110, une pièce fixe 111 et un rail 112.

Le doigt 110 présente une position repliée dans laquelle il est aligné avec la pièce fixe 111 et une position déployée dans laquelle une extrémité du doigt 110 s'étend vers la voie de transport 10. Dans la position déployée, l'extrémité du doigt 110 peut venir en butée contre un portoir situé sur la voie de transport 3, pour bloquer ce portoir.

La position du doigt le long du rail est choisie pour qu'un portoir arrêté par le doigt s'étende sur la zone de transfert 16, prêt à être déplacé par les moyens de sélection 14 sur la zone d'attente 12.

Le rail 112 s'étend le long de la voie de transport 10 selon une direction parallèle à la direction A, pour guider un déplacement d'un ou plusieurs portoirs le long de la voie de transport 10.

Un avantage du doigt 110 est de ne pas bloquer la rotation du plateau 15. Ainsi, le doigt n'interfère pas avec d'éventuels allers-retours de portoirs entre la zone d'attente et la zone d'analyse.

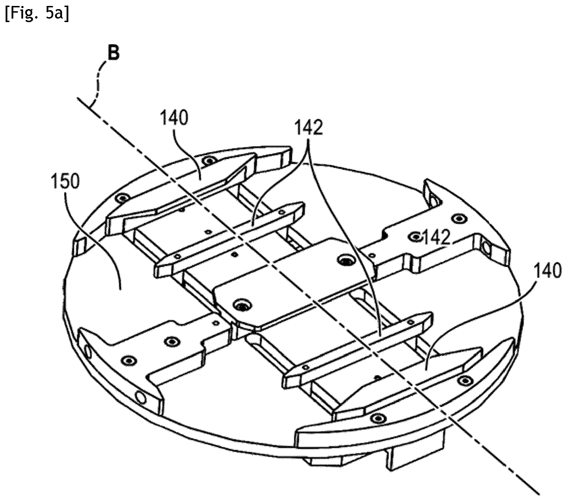

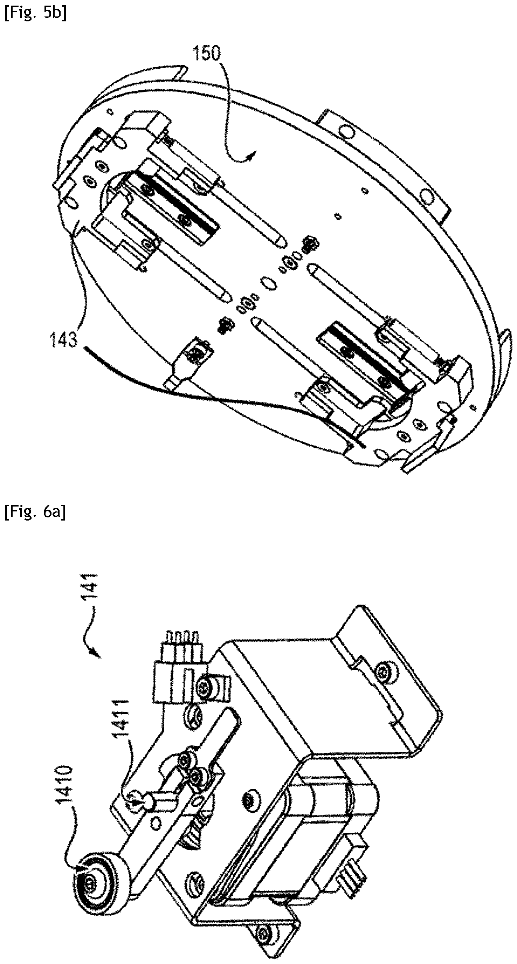

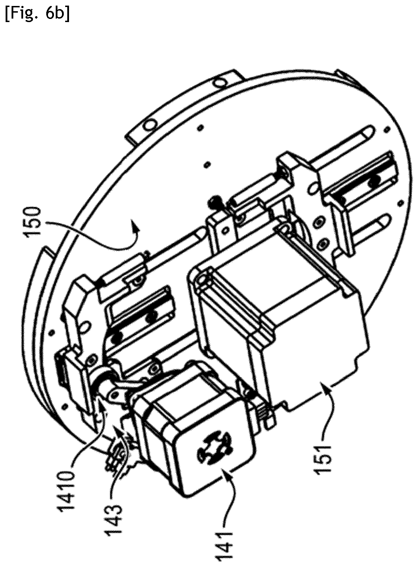

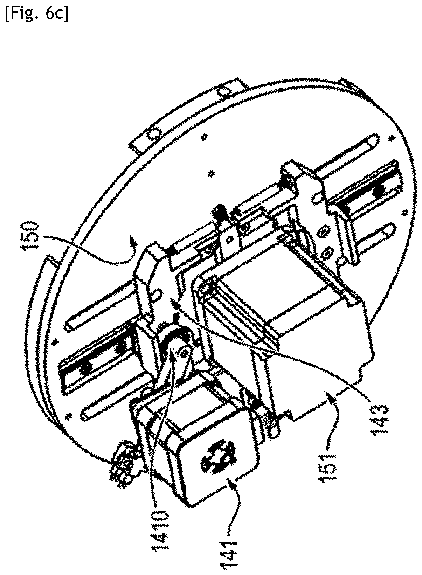

Les **Figures 5a** **et** **5b** sont des vues respectivement de dessus et de dessous du plateau tournant de l'unité de transport de la Figure 2. La **Figure 6a** représente l'actionneur 141 associé aux moyens de sélection 14, où la face positionnée contre le dessous du plateau 15 est vue de dessus. Les **Figures 6b** **et** **6c** sont des vues de dessous du plateau, les actionneurs 141 et 151 associés respectivement aux moyens de sélection 14 et à la rotation du plateau 15 étant montés sur le plateau.

Dans cet exemple, les moyens de sélection, permettant le transfert de portoirs entre la zone de transfert et la zone d'attente, comprennent deux éléments mobiles en translation selon la direction B, montés l'un face à l'autre sur un diamètre du plateau.

Chacun de ces éléments comprend un butoir extérieur 140 et un butoir intérieur 142 sur la face de dessus du plateau, le butoir extérieur étant solidaire du butoir intérieur. Ainsi, le butoir extérieur et le butoir intérieur restent parallèles et conservent entre eux le même écart.

Les butoirs sont solidaires d'une pièce 143 qui dépasse de la face de dessous du plateau et qui est visible sur les Figures 6a, 6b et 6c.

La pièce 143 est couplée à l'actionneur 141. En déplaçant la pièce 143, l'actionneur peut également déplacer un butoir extérieur et le butoir intérieur associé, en translation selon la direction B.

Pour permettre ce déplacement, la pièce 143 comporte ici un élément femelle pouvant entrer en prise avec un élément mâle 1410 déplaçable par l'actionneur. L'élément mâle 1410 est monté à une extrémité libre d'un levier, l'autre extrémité étant montée sur un arbre 1411 mis en rotation par l'actionneur.

Comme visible en Figures 6b et 6c, l'actionneur 141 est disposé sur le côté du chemin de déplacement des butoirs 140 et 142, de sorte que la rotation du levier portant l'élément mâle 1410 entraîne un déplacement en translation des butoirs. L'actionneur 141 est contrôlable électroniquement.

Les Figures 6b et 6c représentent ainsi respectivement une position haute et une position basse des moyens de sélection.

L'actionneur 151 est positionné sur le dessous du plateau 15, en regard du centre du plateau, et est contrôlable électroniquement pour régler la position angulaire du plateau, permettant ainsi de réaliser le mouvement E.

Dans la configuration alternative où le plateau n'est pas tournant, on peut utiliser un plateau conforme aux Figures 5a à 6c, sans un actionneur configuré pour modifier la position angulaire du plateau.

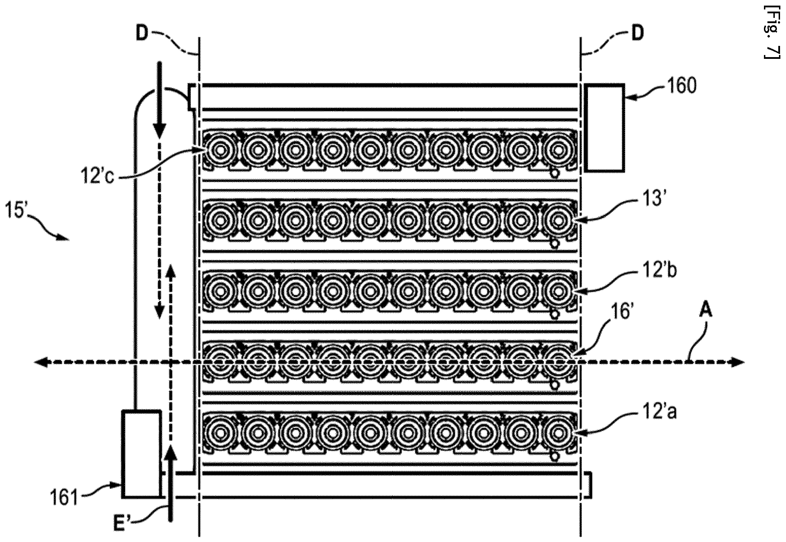

On a représenté schématiquement en **Figure 7** une partie mobile d'une unité de transport d'échantillons selon un mode de réalisation alternatif par rapport au mode de réalisation de la Figure 3.

Dans ce mode de réalisation, le plateau n'est pas mobile. Les portoirs d'échantillons sont entraînés entre plusieurs zones par le déplacement de poussoirs intérieur 160 et extérieur 161. Le portoir intérieur comprend ici un bras s'étendant à travers le plateau, configuré pour emporter dans sa course un portoir qui serait situé sur le plateau. Dans cet exemple, le bras s'étend sensiblement parallèlement à la direction de la voie de transport. Le portoir extérieur comprend un bras similaire.

Les portoirs d'échantillons sont déplacés en translation par lesdits poussoirs selon une troisième direction E' qui n'est pas parallèle à la direction A de transport des portoirs d'échantillons. Dans ce mode, le plateau 15' n'est pas mobile en rotation. Les poussoirs sont associés à un actionneur (non représenté) commandable électroniquement. Les poussoirs sont dotés d'un système de butée qui permet de déplacer chacun des poussoirs selon la direction E' par le dessous.

De même que pour le premier mode, la voie de transport selon la direction A croise le plateau 15' au niveau d'une zone de transfert 16'.

Le plateau 15' comprend des zones d'attente et d'analyse qui sont déportées par rapport à la zone de transfert 16'. En particulier, les zones d'attente et d'analyse s'étendent parallèlement à la direction A et les extrémités desdites zones sont alignées, pour limiter l'encombrement.

Dans l'exemple de la Figure 7, le plateau 15' comprend dans l'ordre du bas vers le haut : une première zone d'attente 12'a, la zone de transfert 16', une deuxième zone d'attente 12'b, une zone d'analyse 13', une troisième zone d'attente 12'c. Toutes ces zones sont de dimensions suffisantes pour pouvoir loger un portoir de dix tubes.

En fonctionnement, si un portoir arrive sur le plateau 15' depuis la voie de transport et se situe dans la zone de transfert 16', ledit portoir peut être entraîné par des poussoirs pour être déplacé dans l'une des zones d'attente ou dans la zone d'analyse. Inversement, un portoir peut être déplacé de la zone d'analyse vers une zone d'attente ou vers la zone de transfert. Les poussoirs permettent également de déplacer un poussoir de la voie de transport vers l'une des zones d'attente ou vers la zone d'analyse.

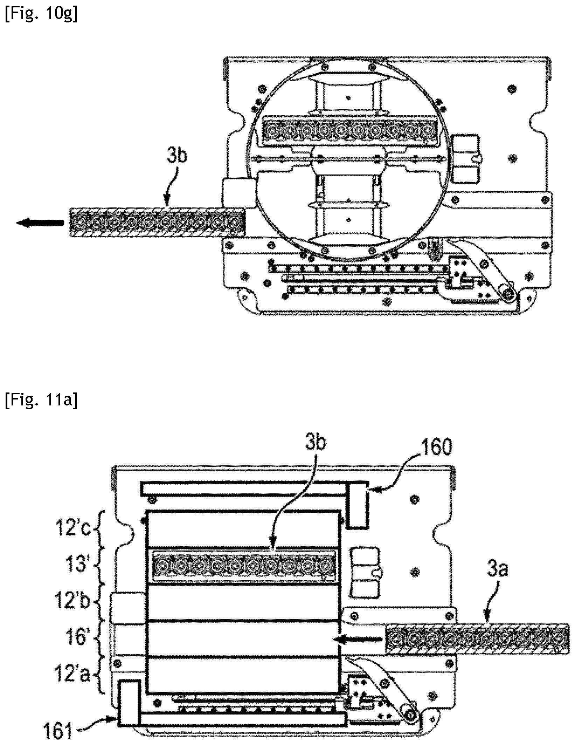

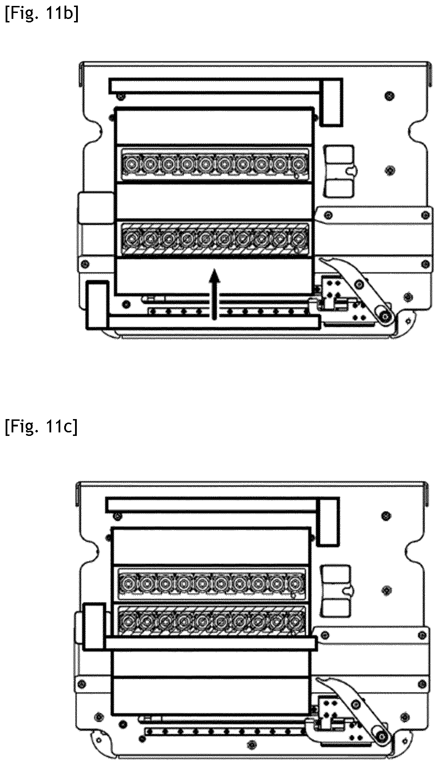

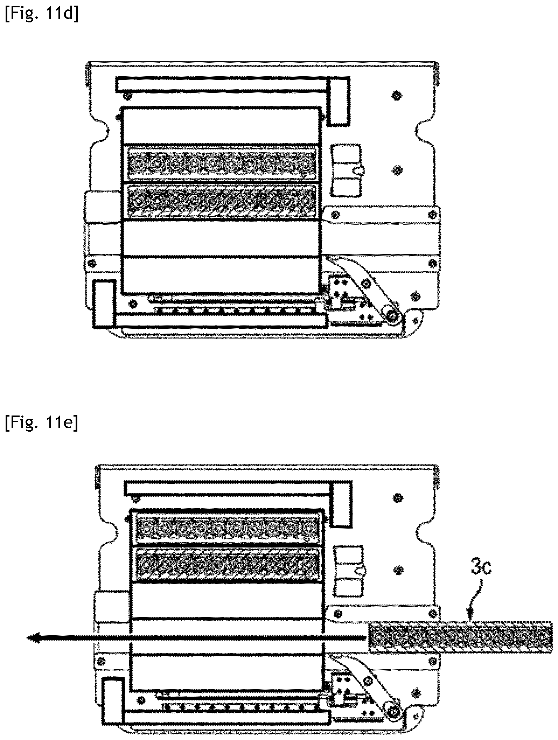

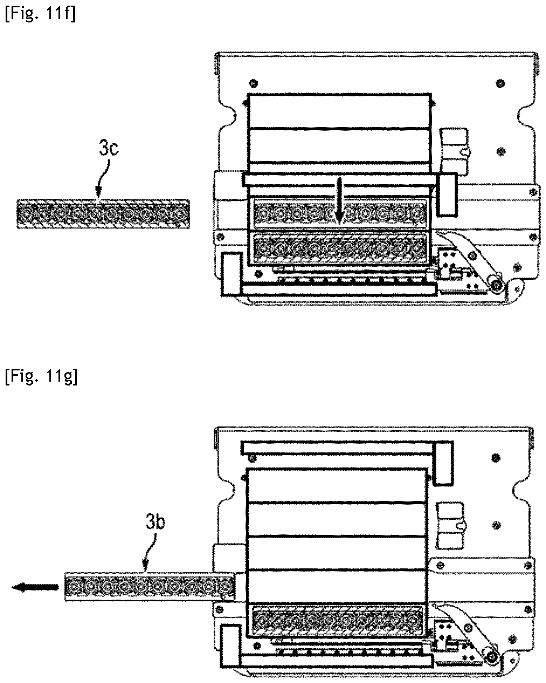

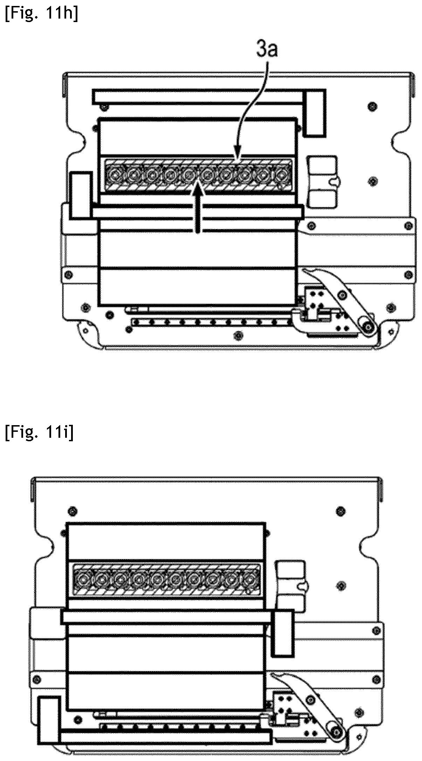

Un exemple de séquence de déplacement de portoirs d'échantillons selon ce mode de réalisation alternatif est décrit ci-après en relation aux Figures 11a à 11i.

Un avantage de ce mode de réalisation à poussoirs est son encombrement faible selon la direction perpendiculaire à la direction de la voie de transport, puisque le nombre total de zones que le portoir peut occuper est égal à cinq.

Dans une configuration alternative (non représentée), le plateau est mobile en translation selon la direction E'. Le système ne comprend alors plus nécessairement de poussoirs configurés pour déplacer des portoirs entre la zone d'attente et la zone d'analyse.

Dans cette configuration alternative, le plateau présente par exemple une largeur correspondant à quatre fois la largeur d'un portoir. Le nombre total de zones qu'un portoir peut occuper (en fonction de la position du plateau mobile) est par exemple égal à sept.

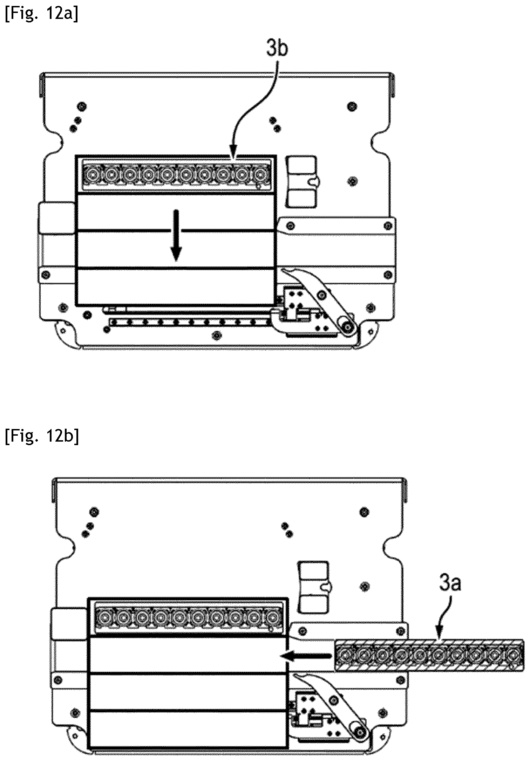

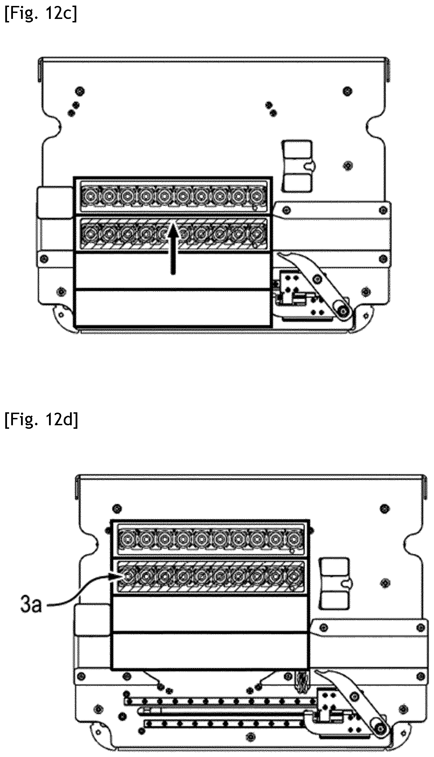

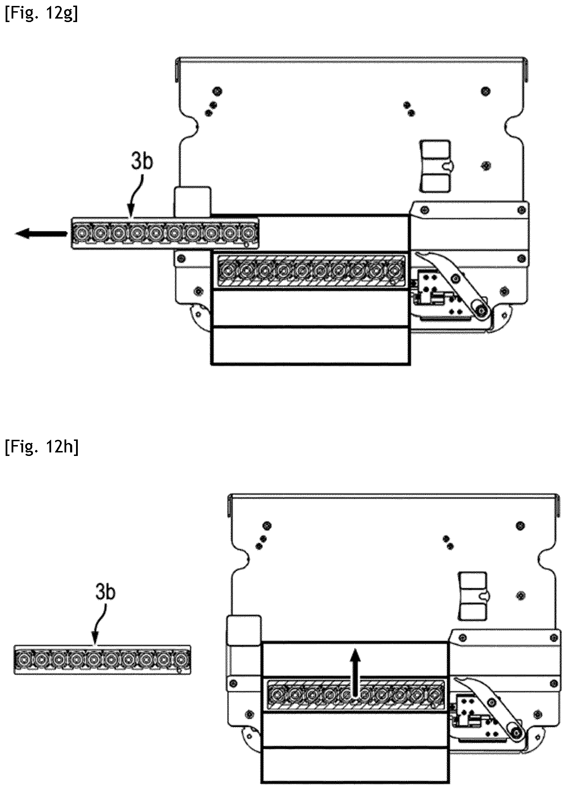

Un exemple de séquence de déplacement de portoirs d'échantillons, selon cette configuration alternative du mode de réalisation correspondant à un déplacement en translation des portoirs, est décrit ci-après en relation aux Figures 12a à 12h. Le plateau 15' selon l'une quelconque de ces configurations peut être utilisé en combinaison avec les autres éléments de l'unité de transport décrits ci-avant, en remplacement du plateau tournant 15 du premier mode.

### Unité de manipulation d'échantillons pour analyse

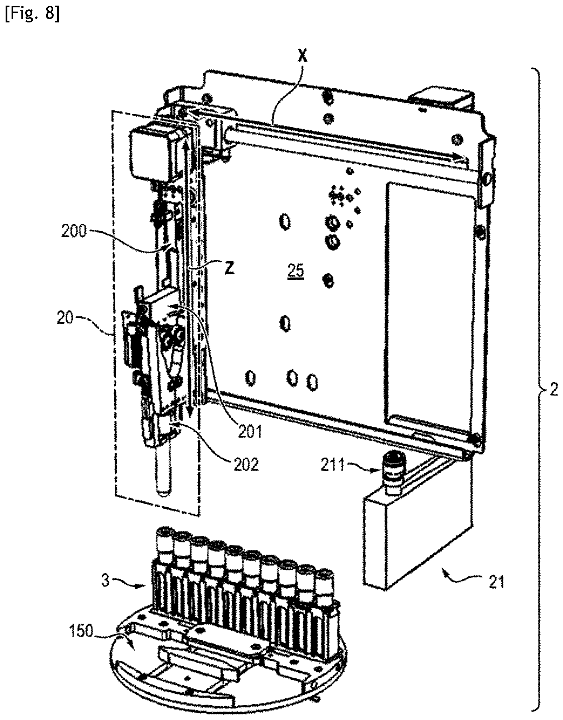

On a représenté en **Figure 8** une partie d'unité de transport d'échantillons comportant une surface tournante 150 selon la Figure 3, sur laquelle est placé un portoir 3 d'échantillons situé dans la zone d'analyse, en regard d'une unité 2 de manipulation d'échantillons.

On notera que l'unité de manipulation d'échantillons décrite ci-après peut aussi bien être utilisée avec un plateau selon l'une quelconque des autres configurations décrites ci-avant.

L'unité 2 de manipulation a notamment pour fonctions de réaliser la manutention un par un des tubes vers une voie d'analyse, et une fois un tube placé sur la voie d'analyse, de prélever l'échantillon contenu dans ledit tube et de réaliser les tests souhaités.

On a représenté sur la Figure 8 un panneau avant de l'unité 2.

Le panneau avant comprend une surface 25 sur laquelle est fixé un module 20 de déplacement d'un contenant d'échantillon vers une position d'échantillonnage 211 (cette dernière position constituant une voie d'analyse d'échantillon).

Le module 20 comporte un rail 200 s'étendant selon une direction Z. Lorsque l'automate de diagnostic est en fonctionnement, la direction Z est sensiblement verticale. Le module 20 comporte en outre un bloc 201 commandable pour se déplacer le long du rail 200.

Une pince 202 est agencée sur le bloc 201. Cette pince est conformée pour saisir un tube contenant un échantillon et l'amener sur la position d'échantillonnage 211.

La pince 202 est ainsi déplaçable selon la direction Z.

Le module 20 est également déplaçable en translation selon une direction X, la pince étant donc aussi déplaçable selon la direction X.

De préférence, la direction X correspond à une direction d'alignement de la zone d'analyse de l'unité de transport d'échantillons, dans laquelle s'étend le portoir 3 sur la vue de la Figure 8.

En fonctionnement, la pince 202 peut s'abaisser selon la direction Z et se déplacer selon la direction X pour saisir l'un quelconque des tubes du portoir, puis pour l'amener sur la voie d'analyse.

L'unité 2 de manipulation comprend en outre un module 21 de préparation et mise à disposition des échantillons pour analyse.

Dans cet exemple, le module 21 comprend la position 211 d'échantillonnage, avec un emplacement pour disposer un tube.

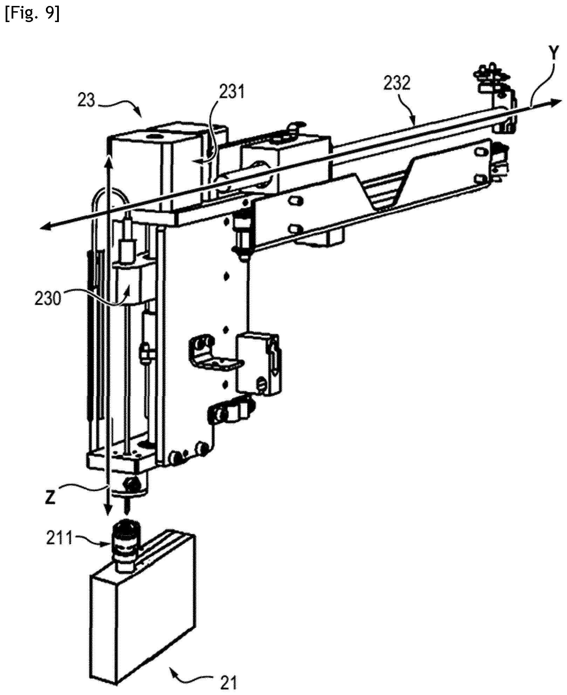

La **Figure 9** représente une deuxième partie de l'unité 2 de manipulation d'échantillons.

Un module 23 de support d'aiguille est représenté sur la Figure 9. Le module 23 comprend une aiguille 230 configurée pour réaliser un prélèvement d'un échantillon depuis la position 211.

L'aiguille est solidaire d'un bloc 231 du module 23, qui est déplaçable le long d'un chemin 232 selon une direction Y.

L'aiguille peut en outre se déplacer, ici selon la direction Z, pour prélever un échantillon depuis la position 211 une fois placée à l'aplomb du tube contenant cet échantillon. La direction Y est ici perpendiculaire à la direction Z.

L'unité 2 comprend en outre l'unité de traitement 24, non représentée sur les Figures 8 et 9, configurée pour commander le déplacement des modules 20 et 23 et pour synchroniser les opérations de prélèvement et d'analyse d'échantillons.

De préférence, l'unité 2 est configurée pour réaliser une identification, une agitation et une analyse d'échantillons. Le temps d'agitation pour tout type d'échantillon de sang est de préférence supérieur à 10 secondes pour chaque échantillon. Une cadence à plein régime de l'unité 2 est comprise entre 80 et 150 échantillons par heure. Cette cadence est par exemple égale à 100 échantillons par heure, le temps de traitement pour analyse d'un échantillon (une fois un régime permanent installé) étant alors de 36 secondes.
Le temps de période (par exemple la durée en minutes d'un test) est généralement égal à la durée de la période d'unité de référence (1h) divisée par le nombre d'échantillons traités dans la période, multipliée par la durée de la nouvelle unité de référence (par exemple 60 secondes).

**[Table 1]**

| Tests/heure | Temps de traitement d'un échantillon |
|---|---|
| 80 | 45 secondes |
| 90 | 40 secondes |
| 100 | 36 secondes |
| 120 | 30 secondes |
| 150 | 24 secondes |

### Exemple de fonctionnement de l'unité de transport d'échantillons

Une séquence de fonctionnement de l'unité 1 de transport d'échantillons selon le mode de réalisation de la Figure 3, dans le cas où le plateau est tournant, est illustrée dans l'ordre chronologique sur les **Figures 10a à 10g**. La séquence s'étend de l'entrée d'un portoir 3a sur le plateau (pendant l'analyse des échantillons d'un autre portoir 3b) jusqu'à la sortie du portoir 3b.

Sur la Figure 10a, le portoir 3b est situé dans la zone d'analyse 13. Ainsi, le module de déplacement de tubes peut sélectionner des tubes du portoir 3b pour analyse.

Indépendamment de l'analyse des tubes du portoir 3b, le nouveau portoir 3a est déplacé le long de la voie de transport 10 (par exemple, depuis une baie d'entrée) pour être inséré.

Le butoir extérieur 140a des moyens de sélection est dans une position basse.

Sur la Figure 10b, le portoir 3a atteint la zone de transfert 16. Le portoir 3a est ainsi positionné sur la surface tournante 150 du plateau. Dans le même temps, l'analyse des tubes du portoir 3b peut se poursuivre.

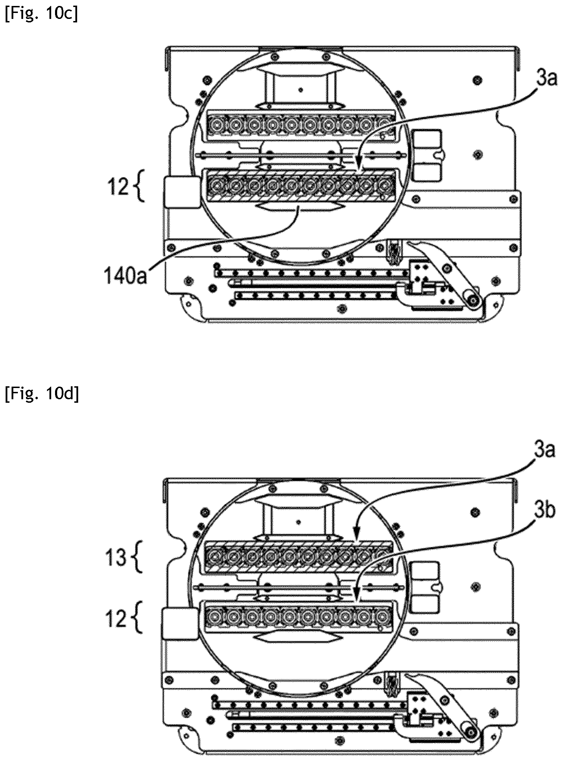

Sur la Figure 10c, les moyens de sélection sont mis en mouvement ; ainsi, un butoir extérieur 140a est déplacé depuis sa position basse vers sa position haute. Ce déplacement entraîne le portoir 3a depuis la zone de transfert 16 vers la zone d'attente 12. Dans le même temps, l'analyse des tubes du portoir 3b peut se poursuivre.

Une fois le portoir 3a placé dans la zone d'attente, le plateau tournant peut être mis en mouvement, comme on le voit sur la Figure 10d. Le plateau tournant pivote sur lui-même jusqu'à réaliser une rotation de 180°.

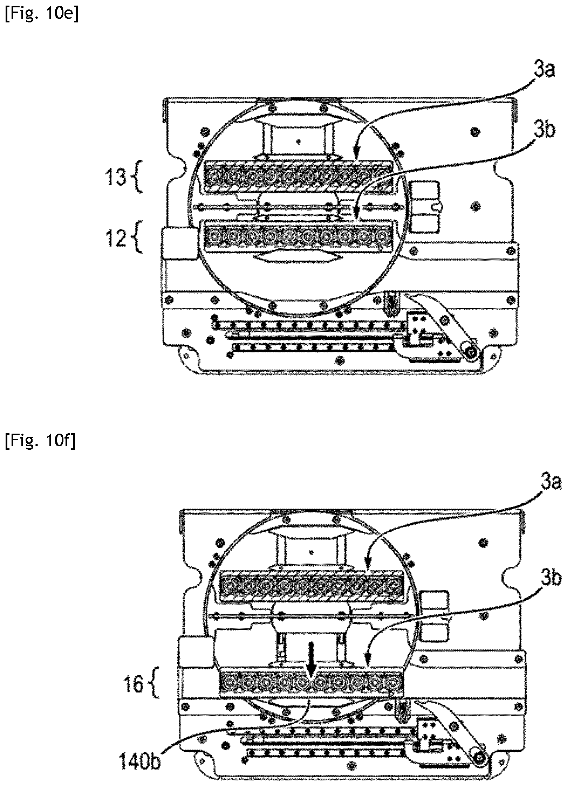

A l'issue de la rotation de 180°, le portoir 3a est amené dans la zone d'analyse 13 et le portoir 3b est amené dans la zone d'attente 12, comme on le voit sur la Figure 10e. Ainsi, les échantillons du portoir 3b peuvent être mis en attente pendant que l'analyseur traite les résultats de tests des échantillons du portoir 3b. Pendant l'attente, les échantillons du portoir 3a peuvent être analysés.

Sur la Figure 10f, le portoir 3a est renvoyé sur la voie de transport de l'unité 1. Pour ce faire, un butoir intérieur 142b (situé en face du butoir 140a) est déplacé depuis une position haute vers une position basse. Ce déplacement entraîne le portoir 3a depuis la zone d'attente 12 vers la zone de transfert 16 située sur la voie de transport.

Sur la Figure 10g, le portoir 3b est entraîné par les moyens de transport 11 pour être déplacé le long de la voie de transport 10 (par exemple, vers une baie de sortie ou vers une autre unité de transport). Le portoir 3b est donc extrait du plateau tournant.

On notera qu'en alternative, au lieu de sortir le portoir 3b après l'analyse des échantillons, le plateau 15 peut à nouveau réaliser une rotation de 180°, ce qui aurait pour effet de ramener le portoir 3b dans la zone d'analyse. Le système peut être paramétré pour réaliser cette deuxième rotation si, parmi les échantillons du portoir 3b, un ou plusieurs échantillons nécessitent des tests secondaires de type Rerun ou Reflex, et doivent donc être remis dans la voie d'analyse.

Par ailleurs, on notera que pendant les étapes où la voie de transport 10 est dégagée (Figures 10c à 10e), un troisième portoir d'échantillons peut être acheminé le long de la voie de transport et traverser l'unité de transport 1, sans que les échantillons correspondants ne fassent l'objet d'une analyse.

Ce dernier cas présente notamment un intérêt dans le cas d'une cadence élevée et pour éviter l'interruption entre deux portoirs. Ce deuxième passage sera réalisé afin de gérer un recouvrement entre le dernier tube du premier portoir et le premier tube du deuxième portoir. Cette opération peut aussi être utilisée dans le cas ou le troisième portoir est vide, ou si les échantillons du troisième portoir ne doivent pas être testés par l'analyseur associé à l'unité de transport 1.

Une séquence de fonctionnement de l'unité 1 de transport d'échantillons selon le mode de réalisation de la Figure 7, dans le cas où le plateau comprend des poussoirs intérieur et extérieur pour déplacer un portoir sur une zone parmi un total de cinq zones, est illustrée dans l'ordre chronologique sur les **Figures 11a à 11i****.** La séquence s'étend de l'entrée d'un portoir 3a sur le plateau (pendant l'analyse des échantillons d'un autre portoir 3b) jusqu'à l'analyse des échantillons du portoir 3a.

On notera que, dans l'état représenté sur la Figure 11e, un troisième portoir 3c rentre par la droite sur l'unité de transport d'échantillons. Sur la Figure 11f, ledit portoir 3c est sorti par la gauche. Le mouvement des portoirs 3a et 3b entre des zones d'attente et d'analyse n'est pas perturbé par le passage du portoir 3c sur la voie de transport.

Une séquence de fonctionnement de l'unité 1 de transport d'échantillons selon le mode de réalisation de la Figure 7, dans le cas où le plateau est mobile en translation selon une direction perpendiculaire à la direction de la voie de transport et ne comprend pas de poussoirs intérieur et extérieur, est illustrée dans l'ordre chronologique sur les **Figures 12a à 12h****.** La séquence s'étend du déplacement d'un portoir 3b vers une zone d'analyse, et de l'entrée d'un portoir 3a sur le plateau, jusqu'à la sortie du portoir 3b.

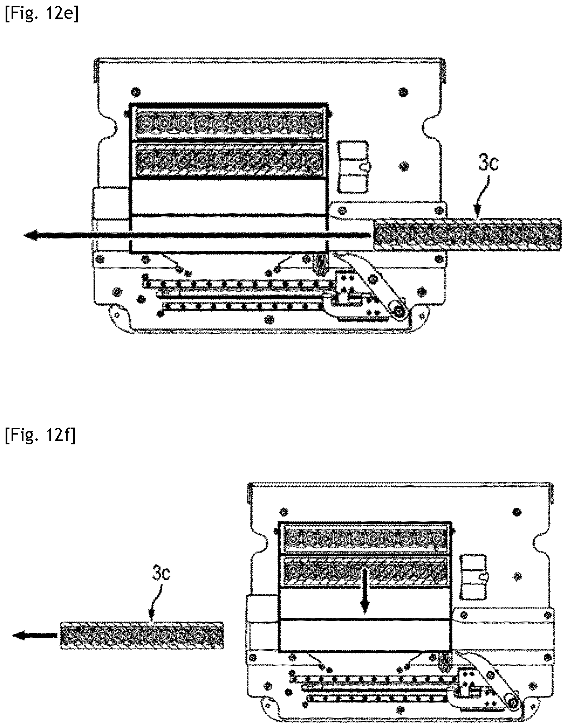

On notera que, dans l'état représenté sur la Figure 12e, un troisième portoir 3c rentre par la droite sur l'unité de transport d'échantillons. Sur la Figure 12f, ledit portoir 3c est sorti par la gauche ; de même que pour les Figures 11a à 11i, la traversée du portoir 3c ne perturbe pas le mouvement des portoirs 3a et 3b.

### Architecture d'ensemble d'un automate de diagnostic - Exemple 2

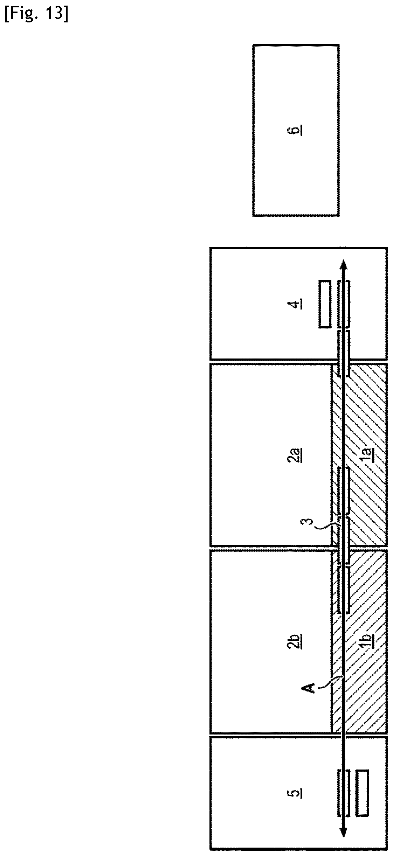

La **Figure 13** est une représentation fonctionnelle par blocs d'un automate de diagnostic selon un mode alternatif, vu du dessus.

A la différence de l'automate de la Figure 1, cet automate comprend deux analyseurs alignés.

L'unité de transport 1a correspondant au premier analyseur 2a et l'unité de transport 1b correspondant au deuxième analyseur 2b sont agencées de sorte que des portoirs 3 puissent être transportés de la baie d'entrée 4 vers la baie de sortie 5 selon une même direction A, en passant par les voies de transport des deux unités de transport.

L'ensemble des unités est commandé par une unité de contrôle 6.

Les unités de transport 1a et 1b peuvent être conformes à l'un quelconque des exemples de structure décrits en relation à la Figure 3 ou à la Figure 7.

De façon avantageuse, le plateau de la première unité de transport d'échantillons est libre dans son déplacement par rapport au plateau de la deuxième unité de transport d'échantillons. En revanche, les deux unités se synchronisent pour ce qui concerne le transport des portoirs d'échantillons le long de la direction A de transport.

L'unité de transport décrite ci-avant, dans laquelle le transport des portoirs le long de la voie de transport est dissocié du déplacement des portoirs entre une zone d'attente et une zone d'analyse, est particulièrement avantageuse si les analyseurs des unités 2a et 2b n'ont pas la même cadence maximale d'analyse.

En effet, il est possible d'utiliser les deux unités 2a et 2b à leur cadence maximale, et les échantillons qui ne nécessitent pas un test par l'unité de cadence la plus basse peuvent passer à travers ladite unité sans bloquer les analyses des autres échantillons.

Ainsi, l'unité de cadence basse n'impose pas son rythme à l'unité de cadence haute.

Il en résulte une meilleure cadence globale de traitement des échantillons, ce qui ouvre la possibilité de disposer en série des analyseurs de cadences différentes, éventuellement destinés à des types de tests différents, voire à des spécialisations médicales différentes.

Dans le cas de tests Reflex réalisés sur un système à cadence plus faible, les systèmes sont de préférence connectés dans l'ordre du plus faible au plus haut niveau d'expertise, dans le sens du transport des portoirs.

## Revendications

1. Unité de transport de contenants d'échantillons qui renferment des échantillons à analyser par un automate de diagnostic, l'unité comprenant :
- une voie (10) de transport de portoirs (3) d'échantillons, ladite voie (10) s'étendant selon une première direction (A), ladite voie (10) comprenant une première extrémité (102) adaptée pour recevoir un portoir d'échantillons depuis un premier dispositif et comprenant une deuxième extrémité (101) adaptée pour transmettre un portoir d'échantillons à un deuxième dispositif,
- un plateau (15) mobile comprenant une surface de positionnement s'étendant selon un plan,
- une zone d'analyse (13) agencée au sein de la surface de positionnement et une zone d'attente (12) agencée au sein de la surface de positionnement, la zone d'analyse et la zone d'attente étant adaptées pour accueillir un portoir (3) d'échantillons et étant déportées de la voie de transport (10),
- des moyens (14) de sélection configurés pour déplacer un portoir (3) d'échantillons entre la voie de transport (10) et la zone d'attente (12),
le plateau (15) étant configuré pour déplacer un portoir le long du plan afin de permettre des allers-retours dudit portoir dans les deux sens entre la zone d'attente (12) et la zone d'analyse (13).

2. Unité de transport selon la revendication 1, comprenant en outre des moyens de transport (11) configurés pour transporter un portoir (3) d'échantillons le long de la voie de transport (10), un actionnement des moyens de transport (11) étant indépendant d'un déplacement du plateau (15).

3. Unité de transport selon la revendication 1 ou 2, dans laquelle les moyens (14) de sélection comprennent un butoir (140) glissant, un glissement du butoir (140) s'effectuant selon une deuxième direction (B) non parallèle à la première direction (A), les moyens de sélection (14) comprenant en outre des moyens (141) de déplacement de butoir.

4. Unité de transport selon l'une des revendications 1 à 3, le plateau (15) étant un plateau tournant,
l'unité de transport comprenant en outre un actionneur (151) qui commande une rotation du plateau, ladite rotation permettant de déplacer un portoir (3) d'échantillons entre la zone d'attente (12) et la zone d'analyse (13), la zone d'attente (12) et la zone d'analyse (13) étant par exemple symétriques par rapport à un axe (C) de rotation du plateau (15).

5. Unité de transport selon l'une des revendications 1 à 4, dans laquelle le plateau (15) comprend une zone de transfert (16), la zone de transfert (16) s'étendant en outre sur la voie (10) de transport.

6. Unité de transport selon l'une des revendications 1 à 5, comprenant en outre une surface séparatrice (17) traversant un centre du plateau (15), ladite surface étant configurée pour empêcher un passage incontrôlé d'un contenant d'échantillon vers la zone d'analyse (13) lors de l'analyse d'un échantillon, ladite surface (17) étant de préférence une vitre.

7. Unité de transport selon l'une des revendications 1 à 6, le plateau (15') étant configuré pour permettre un déplacement en translation d'un portoir d'échantillons selon une direction supplémentaire non parallèle à la première direction (A), le plateau (15') étant par exemple mobile en translation selon la direction supplémentaire.

8. Unité de transport selon la revendication 7, comprenant :
- une première zone d'attente (12'a),
- une zone de transfert (16') s'étendant sur la voie de transport (10),
- une deuxième zone d'attente (12'b),
- la zone d'analyse (13'),
- une troisième zone d'attente (12'c),
le plateau (15') étant configuré pour amener un portoir (3) d'échantillons en l'une quelconque desdites zones.

9. Unité de transport selon l'une quelconque des revendications 1 à 8, dans laquelle la zone d'attente (12) et la zone d'analyse (13) présentent des extrémités alignées, une direction d'extension de la zone d'attente (12) et une direction d'extension de la zone d'analyse (13) étant parallèles à la première direction (A) de la voie de transport.

10. Unité de transport selon l'une des revendications 1 à 9, comprenant en outre un élément d'arrêt (110) configuré pour venir en butée contre un portoir (3) d'échantillons présent sur la voie de transport (10).

11. Unité de transport selon l'une des revendications 1 à 10, l'unité de transport étant adaptée pour transporter un portoir d'échantillons (3) dans un unique sens le long de la voie de transport (10), de la première extrémité (102) vers la deuxième extrémité (101) et/ou présentant une largeur maximale selon la première direction (A) qui est inférieure ou égale à deux fois une longueur d'un portoir (3).

12. Automate de diagnostic pour l'analyse d'échantillons, l'automate de diagnostic comprenant :
- la première unité (1a) de transport de contenants d'échantillons selon l'une des revendications 1 à 11, les contenants renfermant les échantillons à analyser par l'automate de diagnostic,
- une première unité (2a) de manipulation d'échantillons,
la première unité de manipulation d'échantillons comprenant :
un module (20) de déplacement d'un contenant d'échantillon vers une position d'échantillonnage,
un module (23) de support d'aiguille, comprenant une aiguille (230) configurée pour réaliser un prélèvement d'un échantillon depuis la position d'échantillonnage,
une unité de traitement configurée pour commander un déplacement du module (20) de déplacement et du module (23) de support d'aiguille.

13. Automate de diagnostic selon la revendication 12, le module (20) de déplacement étant configuré pour translater un contenant d'échantillons selon une deuxième direction (X) supplémentaire et selon une troisième direction (Z) supplémentaire, la deuxième direction supplémentaire étant une direction d'alignement de la zone d'analyse (13) de la première unité (1a) de transport.

14. Automate de diagnostic selon la revendication 15 ou 16, comprenant en outre :
- une deuxième unité (1b) de transport de contenants d'échantillons selon l'une des revendications 1 à 14, associée à une deuxième unité (2b) de manipulation d'échantillons qui comprend un module de déplacement, un module de support d'aiguille et une unité de traitement, la deuxième unité (2b) de manipulation étant de préférence accolée à la première unité (2a) de manipulation,
- et/ou comprenant en outre une baie d'entrée (4) comprenant un premier espace (42) de logement d'un portoir d'échantillons,
- et/ou comprenant en outre une baie de sortie (5) comprenant un deuxième espace (52) de logement d'un portoir d'échantillons,
la voie de transport (10) de la première unité de transport d'échantillons étant dans le prolongement de la voie de transport de la deuxième unité de transport d'échantillons et/ou dans le prolongement du premier espace (42) de logement de portoir et/ou dans le prolongement du deuxième espace (52) de logement de portoir.

15. Automate de diagnostic selon la revendication 14, dans laquelle une première cadence maximale de traitement d'échantillons, que la première unité (2a) de manipulation est configurée pour atteindre, est distincte d'une deuxième cadence maximale de traitement d'échantillons, que la deuxième unité (2b) de manipulation est configurée pour atteindre.

## Patentansprüche

1. Transporteinheit für Probenbehälter, die von einem Diagnoseautomaten zu analysierende Proben enthalten, wobei die Einheit umfasst:
- eine Bahn (10) zum Transport von Probengestellen (3), wobei sich die Bahn (10) in einer ersten Richtung (A) erstreckt, wobei die Bahn (10) ein erstes Ende (102) umfasst, das geeignet ist, ein Probengestell von einer ersten Vorrichtung aufzunehmen, und ein zweites Ende (101) umfasst, das geeignet ist, ein Probengestell an eine zweite Vorrichtung zu übertragen,
- eine bewegliche Platte (15), die eine sich in einer Ebene erstreckende Positionierungsfläche umfasst,
- einen Analysebereich (13), der innerhalb der Positionierungsfläche angeordnet ist, und einen Wartebereich (12), der innerhalb der Positionierungsfläche angeordnet ist, wobei der Analysebereich und der Wartebereich für die Aufnahme eines Probengestells (3) geeignet sind und von der Transportbahn (10) versetzt sind,
- Auswahlmittel (14), die dazu ausgelegt sind, ein Probengestell (3) zwischen der Transportbahn (10) und dem Wartebereich (12) bewegen,
wobei die Platte (15) dazu ausgelegt ist, ein Gestell entlang der Ebene zu bewegen, um ein Hin- und Herfahren des Gestells in beiden Richtungen zwischen dem Wartebereich (12) und dem Analysebereich (13) zu ermöglichen.

2. Transporteinheit nach Anspruch 1, die ferner Transportmittel (11) umfasst, die dazu ausgelegt sind, ein Probengestell (3) entlang der Transportbahn (10) zu transportieren, wobei eine Betätigung der Transportmittel (11) unabhängig von einer Bewegung der Platte (15) ist.

3. Transporteinheit nach Anspruch 1 oder 2, wobei die Auswahlmittel (14) einen gleitenden Anschlag (140) umfassen, wobei ein Gleiten des Anschlags (140) in einer zweiten Richtung (B) erfolgt, die zur ersten Richtung (A) nicht parallel ist, wobei die Auswahlmittel (14) ferner Abschlagverschiebemittel (141) umfassen.

4. Transporteinheit nach einem der Ansprüche 1 bis 3, wobei die Platte (15) eine Drehplatte ist, wobei die Transporteinheit ferner einen Aktuator (151) umfasst, der eine Drehung der Platte steuert, wobei die Drehung das Bewegen eines Probengestells (3) zwischen dem Wartebereich (12) und dem Analysebereich (13) ermöglicht, wobei der Wartebereich (12) und der Analysebereich (13) beispielsweise symmetrisch zu einer Drehachse (C) der Platte (15) sind.

5. Transporteinheit nach einem der Ansprüche 1 bis 4, wobei die Platte (15) einen Transferbereich (16) umfasst, wobei sich der Transferbereich (16) ferner auf der Transportbahn (10) erstreckt.

6. Transporteinheit nach einem der Ansprüche 1 bis 5, die ferner eine Trennfläche (17) umfasst, die eine Mitte der Platte (15) durchquert, wobei die Fläche dazu ausgelegt ist, ein unkontrolliertes Passieren eines Probenbehälters in den Analysebereich (13) während der Analyse einer Probe zu verhindern, wobei die Fläche (17) vorzugsweise ein Glas ist.

7. Transporteinheit nach einem der Ansprüche 1 bis 6, wobei die Platte (15') dazu ausgelegt ist, eine translatorische Bewegung eines Probengestells in einer zusätzlichen Richtung zu ermöglichen, die nicht parallel zur ersten Richtung (A) ist, wobei die Platte (15') beispielsweise translatorisch in der zusätzlichen Richtung beweglich ist.

8. Transporteinheit nach Anspruch 7, umfassend:
- einen ersten Wartebereich (12'a),
- einen Transferbereich (16'), der sich auf der Transportbahn (10) erstreckt,
- einen zweiten Wartebereich (12'b),
- den Analysebereich (13'),
- einen dritten Wartebereich (12'c),
wobei die Platte (15') dazu ausgelegt ist, ein Probengestell (3) in einen beliebigen der Bereiche zu bringen.

9. Transporteinheit nach einem der Ansprüche 1 bis 8, wobei der Wartebereich (12) und der Analysebereich (13) ausgerichtete Enden aufweisen, wobei eine Erstreckungsrichtung des Wartebereichs (12) und eine Erstreckungsrichtung des Analysebereichs (13) parallel zur ersten Richtung (A) der Transportbahn sind.

10. Transporteinheit nach einem der Ansprüche 1 bis 9, die ferner ein Stoppelement (110) umfasst, das dazu ausgelegt, an ein auf der Transportbahn (10) vorhandenes Probengestell (3) anzustoßen.

11. Transporteinheit nach einem der Ansprüche 1 bis 10, wobei die Transporteinheit dazu geeignet ist, ein Probengestell (3) in einer einzigen Richtung entlang der Transportbahn (10) vom ersten Ende (102) zum zweiten Ende (101) zu transportieren und/oder eine maximale Breite gemäß der ersten Richtung (A) aufweist, die kleiner oder gleich einer doppelten Länge eines Gestells (3) ist.

12. Diagnoseautomat für die Probenanalyse, wobei der Diagnoseautomat umfasst:
- die erste Transporteinheit (1a) für Probenbehälter nach einem der Ansprüche 1 bis 11, wobei die Behälter die vom Diagnoseautomaten zu analysierenden Proben enthalten,
- eine erste Probenhandhabungseinheit (2a),
wobei die erste Probenhandhabungseinheit umfasst: ein Modul (20) zum Bewegen eines Probenbehälters in eine Probennahmeposition,
ein Nadelhaltermodul (23), das eine Nadel (230) umfasst, die dazu ausgelegt ist, eine Probe aus der Probennahmeposition heraus zu entnehmen, eine Verarbeitungseinheit, die dazu ausgelegt ist, eine Bewegung des Bewegungsmoduls (20) und des Nadelhaltermoduls (23) zu steuern.

13. Diagnoseautomat nach Anspruch 12, wobei das Bewegungsmodul (20) dazu ausgelegt ist, einen Probenbehälter in einer zusätzlichen zweiten Richtung (X) und in einer zusätzlichen dritten Richtung (Z) zu bewegen, wobei die zusätzliche zweite Richtung eine Ausrichtungsrichtung des Analysebereichs (13) der ersten Transporteinheit (1a) ist.

14. Diagnoseautomat nach Anspruch 15 oder 16, der ferner umfasst:
- eine zweite Probenbehälter-Transporteinheit (1b) nach einem der Ansprüche 1 bis 14, die einer zweiten Probenhandhabungseinheit (2b) zugeordnet ist, die ein Bewegungsmodul, ein Nadelhaltermodul und eine Verarbeitungseinheit umfasst, wobei die zweite Handhabungseinheit (2b) vorzugsweise an die erste Handhabungseinheit (2a) angekoppelt ist,
- und/oder ferner einen Eingangsschacht (4) umfasst, der einen ersten Raum (42) zur Aufnahme eines Probengestells umfasst,
- und/oder ferner einen Ausgabeschacht (5) umfasst, der einen zweiten Raum (52) zur Aufnahme eines Probengestells umfasst,
wobei die Transportbahn (10) der ersten Probentransporteinheit in der Verlängerung der Transportbahn der zweiten Probentransporteinheit und/oder in der Verlängerung des ersten Raums (42) zur Aufnahme eines Gestells und/oder in der Verlängerung des zweiten Raums (52) zur Aufnahme eines Gestells liegt.

15. Diagnoseautomat nach Anspruch 14, wobei sich eine erste maximale Probenverarbeitungsfrequenz, zu dessen Erreichen die erste Handhabungseinheit (2a) ausgelegt ist, von einer zweiten maximalen Probenverarbeitungsfrequenz, zu dessen Erreichen die zweite Handhabungseinheit (2b) ausgelegt ist, unterscheidet.

## Claims

1. Unit for transporting sample containers that contain samples to analyse by a diagnostic automaton, the unit comprising:
- a path (10) for transporting racks (3) of samples, said path (10) extending along a first direction (A), said path (10) comprising a first end (102) suitable for receiving a sample rack from a first device and comprising a second end (101) suitable for transmitting a sample rack to a second device,
- a moveable tray (15) comprising a positioning surface extending along a plane,
- an analysis area (13) arranged within the positioning surface and a waiting area (12) arranged within the positioning surface, the analysis area and the waiting area being suitable for accommodating a rack (3) of samples and being offset from the transport path (10),
- selection means (14) configured to displace a rack (3) of samples between the transport path (10) and the waiting area (12),
the tray (15) being configured to displace a rack along the plane in order to allow back and forth movements of said rack in both directions between the waiting area (12) and the analysis area (13).

2. Transport unit according to claim 1, further comprising transport means (11) configured to transport a rack (3) of samples along the transport path (10), an actuation of the transport means (11) being independent of a displacement of the tray (15).

3. Transport unit according to claim 1 or 2, wherein the selection means (14) comprise a sliding stopper (140), a sliding of the stopper (140) taking place along a second direction (B) not parallel to the first direction (A), the selection means (14) further comprising stopper displacement means (141).

4. Transport unit according to one of claims 1 to 3, the tray (15) being a rotating tray, the transport unit further comprising an actuator (151) that controls a rotation of the tray, said rotation making it possible to displace a rack (3) of samples between the waiting area (12) and the analysis area (13), the waiting area (12) and the analysis area (13) being for example symmetrical with respect to an axis (C) of rotation of the tray (15).

5. Transport unit according to one of claims 1 to 4, wherein the tray (15) comprises a transfer area (16), the transfer area (16) further extending over the transport path (10).

6. Transport unit according to one of claims 1 to 5, further comprising a separating surface (17) passing through a centre of the tray (15), said surface being configured to prevent an uncontrolled passage from a sample container to the analysis area (13) during the analysis of a sample, said surface (17) preferably being a glass.

7. Transport unit according to one of claims 1 to 6, the tray (15') being configured to allow a translational displacement of a rack of samples along an additional direction not parallel to the first direction (A), the tray (15') being for example translationally movable along the additional direction.

8. Transport unit according to claim 7, comprising:
- a first waiting area (12'a),
- a transfer area (16') extending over the transport path (10),
- a second waiting area (12'b),
- the analysis area (13'),
- a third waiting area (12'c),
the tray (15') being configured to bring a rack (3) of samples into any one of said areas.

9. Transport unit according to any one of claims 1 to 8, wherein the waiting area (12) and the analysis area (13) have aligned ends, an extension direction of the waiting area (12) and an extension direction of the analysis area (13) being parallel to the first direction (A) of the transport path.

10. Transport unit according to one of claims 1 to 9, further comprising a stop element (110) configured to abut against a rack (3) of samples present on the transport path (10).

11. Transport unit according to one of claims 1 to 10, the transport unit being suitable for transporting a rack of samples (3) in a single sense along the transport path (10), from the first end (102) to the second end (101) and/or having a maximum width along the first direction (A) that is less than or equal to twice a length of a rack (3).

12. Diagnostic automaton for the analysis of samples, the diagnostic automaton comprising:
- the first unit (1a) for transporting sample containers according to one of claims 1 to 11, the containers containing the samples to analyse by the diagnostic automaton,
- a first unit (2a) for handling samples,
the first unit for handling samples comprising: a module (20) for displacing a sample container to a sampling position,
a needle support module (23), comprising a needle (230) configured to carry out a collection of a sample from the sampling position, a processing unit configured to control a displacement of the displacement module (20) and the needle support module (23) .

13. Diagnostic automaton according to claim 12, the displacement module (20) being configured to translate a sample container along a second additional direction (X) and along a third additional direction (Z), the second additional direction being an alignment direction of the analysis area (13) of the first transport unit (1a).

14. Diagnostic automaton according to claim 15 or 16, further comprising:
- a second unit (1b) for transporting sample containers according to one of claims 1 to 14, associated with a second unit (2b) for handling samples that comprises a displacement module, a needle support module and a processing unit, the second unit (2b) for handling preferably being attached to the first unit (2a) for handling,
- and/or further comprising an input bay (4) comprising a first space (42) for housing a sample rack,
- and/or further comprising an outlet bay (5) comprising a second space (52) for housing a sample rack,
the transport path (10) of the first unit for transporting samples being in the prolongation of the transport path of the second unit for transporting samples and/or in the prolongation of the first rack housing space (42) and/or in the prolongation of the second rack housing space (52).

15. Diagnostic automaton according to claim 14, wherein a first maximum sample processing rate, which the first unit (2a) for handling is configured to attain, is distinct from a second maximum sample processing rate, which the second unit (2b) for handling is configured to attain.
